# EUROPÄISCHE PATENTSCHRIFT

(11) **EP 0 788 737 B1**
(45) Veröffentlichungstag und Bekanntmachung des Hinweises auf die Patenterteilung: **17.10.2001**
(21) Anmeldenummer: 97101873.4
(22) Anmeldetag: 05.02.1997
(51) Int. Cl.: A01K 9/00

(54) **Vorrichtung zum automatischen Füttern von Kälbern**
Automatic calf feeder
Dispositif d'alimentation automatique pour veaux

(30) Priorität: 06.02.1996 DE 19604199
(43) Veröffentlichungstag der Anmeldung: 13.08.1997
(73) Patentinhaber: Laue, Hans-Joachim, Prof. Dr., 24783 Osterrönfeld (DE); Holm, Hans-Joachim, 24784 Westerrönfeld (DE)
(72) Erfinder: Laue, Hans-Joachim, Prof. Dr., 24783 Osterrönfeld (DE); Holm, Hans-Joachim, 24784 Westerrönfeld (DE)
(74) Vertreter: Patentanwälte Hauck, Graalfs, Wehnert, Döring, Siemons

(56) Entgegenhaltungen:
- EP-A- 0 121 717
- EP-A- 0 519 143
- CH-A- 472 830
- DE-A- 1 607 130
- DE-U- 9 212 038
- DE-U- 9 416 534
- LANDTECHNIK, Bd. 36, Nr. 7/8, Juli 1981 - August 1981, LEHRTE (DE), Seiten 368-371, XP002030353 H. PIRKELMANN: "Tränkedosierautomaten für die Kälberhaltung"

## Beschreibung

Die Erfindung bezieht sich auf eine Vorrichtung zum automatischen Füttern von Kälbern nach dem Oberbegriff des Patentanspruchs 1.

Aus DE 92 12 038 U1 ist eine Vorrichtung zum automatischen Füttern von Kälbern bekanntgeworden, bei der der Stand, in dem die Tiere während des Saugens sich befinden, einheitlich mit dem Gehäuse für eine Steuervorrichtung ausgebildet ist. Der Stand weist eine sogenannte Vorderfußwaage auf, welche über eine entsprechende Umrechnungsformel das Gewicht eines Tieres berechnet, wenn es auf der Vorderfußwaage aufsteht. Dem Stand ist ferner eine Erkennungseinheit zugeordnet, die mit einem sogenannten Responder am Kalb (am Hals oder Ohr befestigt) zusammenwirkt, um die individuellen Daten an die Prozeßsteuerung weiterzugeben, welche für die automatische Anmischung und Zumessung des Flüssigfutters sorgt.

Aus DE 94 16 534 U1 ist eine Vorrichtung zum automatischen Füttern von Kälbern bekanntgeworden, bei der eine Anmischvorrichtung in einem vom Tränkestand separaten Gehäuse angeordnet ist. Ein von oben zugänglicher Vorratsraum für Trockenfutter, der durch einen Deckel dicht verschließbar ist, weist eine Dosiervorrichtung auf, mit der das Trockenfutter dosiert in ein Mischgefäß gegeben wird. Mit dem Mischgefäß ist außerdem das Abgabeende eines Warmwasserbereiters verbunden, um die Futtermischung auf eine vorgegebene Temperatur zu bringen.

Häufig wird auch Milch als Futterbestandteil verwendet zusätzlich zur Mischung aus Trockenfutter und Wasser. Bisher war es üblich, einzelne Komponenten der Futtermischung auf die vorgegebene Temperatur zu bringen bzw. die fertige Mischung über einen Wärmeaustauscher zu leiten, um die erforderliche Temperatur zu erhalten. Die Wärmeaustauscher, z.B. in Form von Heizschlangen, verschmutzen bei milchhaltigen Produkten teilweise schnell und führen zu einem erheblichen Reinigungsaufwand. Langfristig ist eine manuelle Mithilfe für die Reinigung erforderlich. Außerdem leidet die Qualität des Flüssigfutters bei längerer Standzeit in einer Heizschlange.

Der Erfindung liegt daher die Aufgabe zugrunde, eine Vorrichtung zum automatischen Füttern von Kälbern zu schaffen, in welcher die vorgegebene Temperatur für das Flüssigfutter unabhängig von der Umgebungstemperatur und den Temperaturen der Futterkomponenten in weiten Grenzen einstellbar ist, ohne daß die Qualität des Flüssigfutters leidet oder Teile der Vorrichtung Beeinträchtigungen unterliegen.

Diese Aufgabe wird durch die Merkmale des Patentanspruchs 1 gelöst.

Bei der Vorrichtung ist ähnlich wie bei einer bekannten Vorrichtung ein Warmwasserbereiter vorgesehen, mit dem mit Hilfe eines Sensors eine vorgegebene Temperatur für eine vorgegebene Wassermenge erhalten werden kann. Parallel zur Warmwasserzufuhr zum Mischgefäß liegt eine Kaltwasserleitung, mit der Kaltwasser in das Mischgefäß eingegeben werden kann. Mit Hilfe der vorhandenen Temperaturfühler kann die Temperatur des Warmwassers, des Kaltwassers und ggf. des Fertigflüssigfutters, z.B. Vollmilch, bestimmt und in den Prozeßrechner gegeben werden. Dieser ermittelt aus diesen Daten sowie aus der Menge des Fertigflüssigfutters die Anteile von Kalt- und Warmwasser, die erforderlich sind, um nach dem Eintragen die Mischung auf die vorher eingestellte Temperatur zu bringen. Je nach dem zu fütternden Tier (z.B. je nach Alter) kann die Solltemperatur verschieden sein. Sie wird vorher im Prozeßrechner abgelegt.

Bei der Vorrichtung erfolgt die Erwärmung des Futters im Mischgefäß mit Hilfe der dosierten Zugabe von Kalt- und Warmwasser. Aus den bekannten Mischungsgesetzen läßt sich daher die Temperatur des Futters im Mischgefäß gezielt einstellen. Zwar kann nach einer Ausgestaltung der Erfindung im Mischgefäß eine Heizvorrichtung angeordnet sein. Diese dient jedoch im wesentlichen zur Aufrechterhaltung der Temperatur und nicht zur Einstellung der Temperatur des Mischfutters.

Trotz einer die Warmwasserleitung teilweise überbrückenden Kaltwasserleitung ist es vorteilhaft, wenn eine einzige Zuleitung für Kalt- und Warmwasserleitung in das Mischgefäß führt. Das Abgabeende dieser Zuleitung liegt vorzugsweise oberhalb des Mischgefäßes.

Ist das Mischgefäß nach oben offen, besteht Gefahr, daß Fliegen in das Mischgefäß gelangen und ggf. dort ertrinken und dadurch Verunreinigungen hervorrufen. Es ist daher vorteilhaft, wenn das Mischgefäß von einem Deckel nach oben abgeschlossen ist. Dieser ist schwenkbar so gelagert, daß er beim Auftreffen von Futter bzw. Flüssigkeit von oben in das Mischgefäß hineinschwenkt. Am Deckel greift vorzugsweise ein verstellbares Gegengewicht an; seine Einstellung bestimmt, bei welchem Gewicht an Flüssigkeit bzw. Trockenfutter der Deckel verschwenken soll, um das Futter in das Gefäß zu lenken.

Es sind verschiedene Möglichkeiten für die Anordnung von Temperaturfühlern denkbar. Besonders vorteilhaft ist, wenn ein Temperaturfühler in der Zuleitung angeordnet ist, vorzugsweise in einer Vertiefung der Zuleitung. Wird zum Beispiel Fertigfutter über die Zuleitung in das Mischgefäß dosiert, kann zugleich dessen Temperatur ermittelt und in die Prozeßsteuerung gegeben werden. Bei der anschließenden Errechnung der zuzumischenden Anteile von Warm- und Kaltwasser kann dann die gemessene Temperatur des Fertigflüssigfutters berücksichtigt werden. Der Fühler in der Zuleitung kann auch dazu verwendet werden, die Kaltwassertemperatur zu bestimmen. Vor der Einleitung von Kaltwasser wird zunächst nur eine sehr geringe Menge zugemessen, welche ausreicht, eine Temperaturmessung vorzunehmen. Da die Kaltwassertemperatur erfahrungsgemäß recht konstant ist, kann sie zum Beispiel auch beim Kaltwasserspülen bestimmt und dann für mehrere Mischungen benutzt werden.

Die Zumessung der einzelnen Mengen über entsprechende Steuerventile kann in der Weise erfolgen, daß eine Mengenregelung vorgenommen wird. Einfacher ist es jedoch, wenn die Zumessung über definierte Öffnungszeiten für die Ventile erfolgt. Hierfür ist jedoch erforderlich, daß in der Leitung zur Kaltwasser- bzw. zur Warmwasserzufuhr ein Druckregelventil angeordnet ist. Unabhängig vom Druck der Wasserversorgung, z.B. eines öffentlichen Netzes kann daher ein konstanter Arbeitsdruck eingestellt werden, zum Beispiel von 0,5 bar.

Im Mischgefäß ist vorzugsweise ein Mischrotor angeordnet, der von einem Elektromotor antreibbar ist. Der Elektromotor kann in der Drehrichtung umkehrbar sein. Ist der Mischrotor so ausgebildet, daß er je nach Drehrichtung eine unterschiedliche Verwirbelung erzeugt, dann kann die Drehrichtung mit der größeren Verwirbelung für die Reinigungsphase verwendet werden, die nach einer gewissen Betriebszeit, beispielsweise von einem Tag, durchgeführt wird.

Bereits während des Anmischens oder nach beendeter Anmischzeit, die ebenfalls durch den Prozeßrechner vorgegeben wird, wird ein Steuerventil in der Saugleitung geöffnet, wenn die anderen Voraussetzungen vorliegen. Das Anmischen wird durch Betreten und Identifizieren eines Tieres im Abrufbereich in Gang gesetzt, wobei die für das Tier individuell eingestellte Zusammensetzung und Menge des Flüssigfutters hergestellt wird. Durch Saugen des Tieres an einem Saugnuckel im Abrufbereich kann es dann die vorgegebene Menge absaugen. Wird es durch ein anderes Tier verdrängt, das keinen Anspruch auf Zuteilung hat und auch eine andere Futtermittelzusammensetzung benötigt, wird das Steuerventil in der Saugleitung geschlossen. Nach einer gewissen Zeit wird die Mischung im Mischgefäß über einen Ablauf mit Steuerventil abgelassen, wenn das berechtigte Tier nicht den Rest abgesaugt hat. Die Steuerung kann über die Zeit und/oder über einen Füllstandssensor im Mischgefäß und/oder einem Temperatursensor im Auslauf erfolgen.

Nach einer anderen Ausgestaltung der Vorrichtung ist das Mischgefäß außen an einem Gehäuse angebracht und um eine horizontale Achse verschwenkbar gelagert. Dadurch kann es leicht von Hand geleert und gereinigt werden. Das Gehäuse umgibt das Vorratsgefäß für Trockenfutter sowie den Warmwasserbereiter, die Dosiervorrichtung sowie Ventile und die Pumpe für die Zufuhr der Komponenten. Die Bedienung der Prozeßsteuerung ist vorzugsweise ebenfalls außerhalb im oberen Bereich des Gehäuses angeordnet, damit sie ohne weiteres zugänglich ist.

Wird zum Beispiel eine große Menge Vollmilch verfüttert und soll diese eine vorgegebene Temperatur haben, dann ist durch Warmwasserzufuhr möglich, die Milch zu erwärmen. Zu diesem Zweck wird zum Beispiel die Temperatur im Warmwasserbereiter auf 80°C gebracht, so daß nur wenig Heißwasser und Trockenfutter der Vollmilch zugesetzt werden müssen, um im Mischgefäß ein Flüssigfutter mit der richtigen Temperatur und Konzentration zu erhalten.

Die Vorrichtung ist auch für eine vollautomatische Reinigung geeignet. Durch Zugabe von zum Beispiel Kaltwasser können Milchreste aus dem Mischgefäß entfernt werden. Nach einer Ausgestaltung der Vorrichtung ist es auch vorteilhaft, wenn eine Zuteilvorrichtung in Form eines Ventil, einer Pumpe oder dergleichen vorgesehen ist, über die z.B. Reinigungsmittel in das Mischgefäß eintragbar ist. Das Abgabeende für die Reinigungsflüssigkeit ist ebenfalls vorzugsweise oberhalb des Mischgefäßes angeordnet. Zeitgesteuert wird daher eine vorgegebene Menge Reinigungsmittel in das Mischgefäß eingetragen. In einer ersten Stufe kann dann z.B. durch Betätigung des entsprechenden Ventils Warmwasser in das Mischgefäß eingetragen werden. Mit Hilfe des Mischrotors kann ein intensives Mischen der Reinigungslösung über eine vorgegebene Zeit erfolgen. Am Ende der Reinigungszeit wird Spülwasser durch Betätigung des Ventils in der Abgabeöffnung abgelassen. Anschließend kann in einem weiteren Reinigungsvorgang Kaltwasser eingetragen werden, um Reste des Spülmittels aus dem Mischgefäß zu entfernen. Auch die Saugleitung kann automatisch gereinigt werden, nämlich dadurch, daß am Ende eines jeden Kalbbesuchs eine kleine Menge Warmwasser in das Mischgefäß gegeben wird. Das Warmwasser spült nicht nur das Mischgefäß, sondern auch die Leitung zum Nuckel, weil es vom Kalb durch die Leitung gesogen wird. Der bereits oben erwähnte Schutzdeckel hat bei dieser Art der ständigen Nachreinigung am Ende eines jeden Tierbesuchs den weiteren Vorteil, daß der Wasserzulauf an den Innenwandflächen des Mischgefäßes entlang erfolgt, so daß die Milchreste von der Wandfläche gezielt heruntergespült werden und auch dem Kalb nährwertmäßig noch zur Verfügung stehen. Da bei Kälbern in der Regel die Gefahr besteht, daß sie zu wenig Trinkwasser aus dem Wasserbecken im Stall aufnehmen, sind auch aus dieser Sicht Vorteile durch das Nachspülen mit Warmwasser zu verzeichnen.

Grundsätzlich kann die Vorrichtung so gesteuert werden, daß die letzte für ein Kalb bei einem Besuch angemischte Portion vom Kalb ganz ausgetrunken werden kann. Damit ist das Mischgefäß völlig geleert, und die Saugleitung zum Nuckel mit Luft gefüllt. Auch bei längeren Wartezeiten kann daher kein Einfrieren stattfinden. Gleichwohl kann eine Anpassung an kältere Temperaturen vorgenommen werden. Der bereits erwähnte bzw. ein zusätzlicher Sensor erfaßt bei längeren Standzeiten die Umgebungstemperatur. Bei niedriger Umgebungstemperatur und längerer Standzeit wird daher die erste Mischung für ein Kalb automatisch in der Temperatur erhöht, beispielsweise um 5°. Die Differenz von 5° dient dann der Erwärmung der Saugleitung. Die nachfolgende Mischung hat dann wieder die für das entsprechende Kalb eingestellte Temperatur.

Eine weitere Möglichkeit, der Kälte zu begegnen, besteht auch in der Anordnung einer Heizvorrichtung im Mischgefäß. Ist diese jedoch nicht vorhanden und findet über eine längere Zeit ein Anmischen nicht statt, dann kann eine definierte Menge Heißwasser in das Mischgefäß eingetragen werden. Das Heißwasser kann im Mischgefäß mehrere Minuten verbleiben, bevor es abgelassen wird.

Nach einer Ausgestaltung der Vorrichtung ist vorgesehen, daß zwei oder mehr Mischgefäße nebeneinander angeordnet und mittels einer Verstelleinrichtung zur Zuleitung ausrichtbar sind. Auf diese Weise können mehrere Jungtiergruppen mit Flüssigfutter versorgt werden und trotzdem mehrere Jungtiere der verschiedenen Gruppen gleichzeitig trinken. Eine Vorrangschaltung ist nicht erforderlich. Nachdem für eine erste Gruppe Flüssigfutter hergestellt wurde, verstellt die Verstellvorrichtung die Mischgefäßanordnung, so daß ein anderes Mischgefäß mit der Zuleitung ausgerichtet wird. In diesem wird dann eine zweite Mischung hergestellt, zum Beispiel für ein Kalb in einer zweiten Gruppe. Diese Mischung kann zum Beispiel einen höheren Flüssigfutteranteil enthalten und eine niedrigere Temperatur aufweisen, um zum Beispiel Energiekosten zu sparen, weil zum Beispiel die Kälber dieser Gruppe schon älter sind und eine niedrigere Tränketemperatur ermöglichen. Sobald die Tränke für ein Kalb der zweiten Gruppe hergestellt ist, kann zum Beispiel sogar ein drittes Mischgefäß mit der Zuleitung ausgerichtet werden, um zum Beispiel ein Kalb einer dritten Gruppe zu versorgen, so daß mit der Tränkstation insgesamt große Tierzahlen versorgt werden, aber aus jeder Gruppe je ein Kalb gleichzeitig trinken kann.

Kommt es bei der Verwendung von mehreren Mischgefäßenbedingt durch die Anmischdauer - kurzzeitig zu einem Engpaß, so kann die Steuervorrichtung so programmiert sein, daß vorrangig für ein Kalb in der Gruppe mit den jüngsten Tieren die Mischung hergestellt wird. Wie die Praxis zeigt, sind ältere Kälber eher bereit, einige Sekunden zu warten.

Die Dosiervorrichtung weist vorzugsweise eine Dosierschnecke auf, die am unteren Ende des Vorratsraums angeordnet ist. Ihr ist eine Auflockerungsvorrichtung zugeordnet, die dafür sorgt, daß es zu keiner Brückenbildung kommt. Die Austragöffnung der Dosiervorrichtung befindet sich vorzugsweise oberhalb des Mischgefäßes und unterhalb der Zuleitung für die Flüssigkeit, so daß bereits oberhalb des Mischgefäßes eine erste Durchmischung stattfindet, und das Trockenfutter wirksam in das Mischgefäß eingetragen wird.

Die Vorrichtung wird nachfolgend anhand einer Zeichnung näher erläutert.

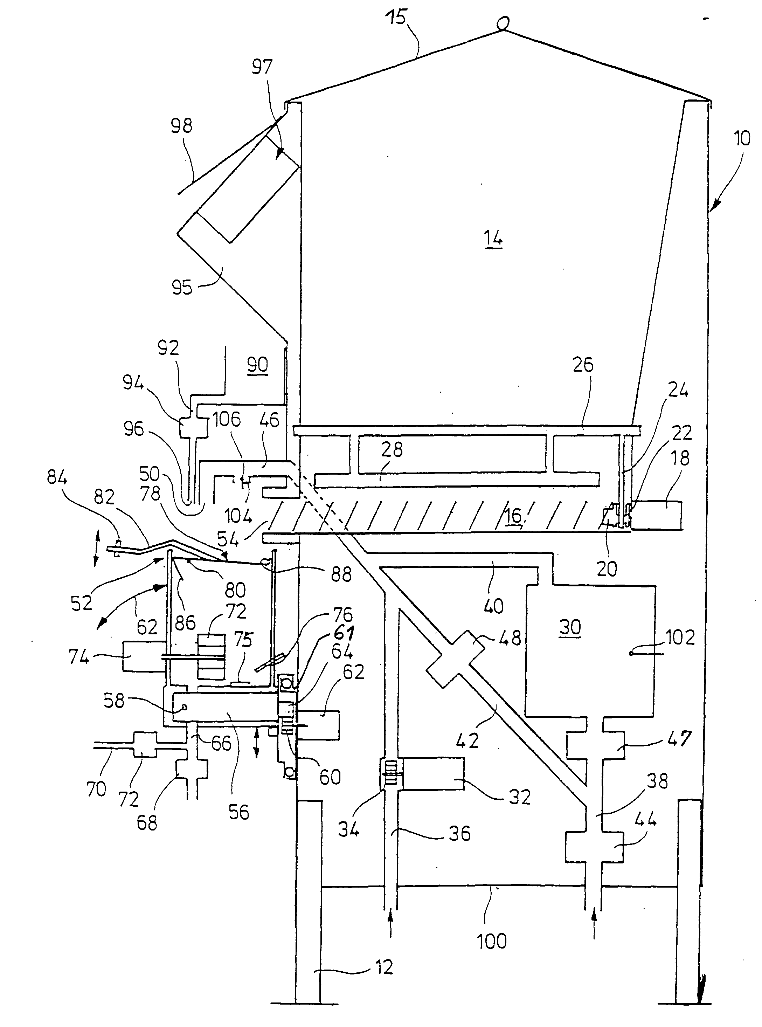

Die einzige Figur zeigt äußerst schematisch eine Vorrichtung zum automatischen Füttern von Kälbern.

In einem wetterfesten Gehäuse 10 aus geeignetem Material, zum Beispiel glasfaserverstärktem Kunststoff, das auf vier soliden Füßen 12 steht, ist im oberen Bereich ein Milchpulver-Vorratsraum 14 angeordnet, der durch einen abnehmbaren Deckel 15 nach oben abgeschlossen ist. Knapp oberhalb des Bodens des Vorratsraums 14 ist eine Förderschnecke 16 mit horizontaler Achse drehbar gelagert, die von einem Elektromotor 18 über eine Welle 20 antreibbar ist. Die Welle weist einen Exzenter 22 auf, mit dem eine Gabel 24 zusammenwirkt, die mit einer Welle 26 verbunden ist, die im Gehäuse 10 um eine horizontale Achse drehbar gelagert ist. Eine Drehung der Welle 20 führt mithin zu einer oszillierenden Drehung der Welle 26. An der Welle sind zwei im Winkelabstand angeordnete Flacheisen angehängt, von denen eines bei 28 gezeigt ist. Sie führen mithin eine pendelnde Bewegung oberhalb der Schnecke 16 aus und dienen zur Auflockerung des Milchpulvers im Vorratsraum 14 und zur besseren Zufuhr zur Förder- und Dosierschnecke 16.

Unterhalb des Vorratsraums 14 sind im Gehäuse 10 ein Warmwasserbereiter 30, eine durch einen Elektromotor 32 angetriebene Pumpe 34 in einer Leitung 36 sowie Leitungen 38, 40, 42 und 46 angeordnet. Am Zulauf 38 sitzt ein Druckminderer 44. In der Kaltwasserleitung 42 ist ein Steuerventil 48, in einer Warmwasserleitung 40 ein Steuerventil 47 angeordnet.

Die Leitung 36 ist mit einem Vorratsbehälter für z.B. Vollmilch verbunden, während die Leitung 38 zum Beispiel mit einer Kaltwasserquelle, beispielsweise aus öffentlicher Versorgung, verbunden ist. Die Leitungen 40, 42 und 36 führen zur gemeinsamen Leitung 46, deren Abgabeende 50 oberhalb eines Mischgefäßes 52 angeordnet ist. Wie erkennbar, liegt das Abgabeende 50 auch oberhalb des Abgabeendes 54 der Dosierschnecke 16. Das Gefäß 52 ist auf einem Lagerbauteil 56 angeordnet, das an der Außenseite an das Kugellager des Gehäuses 10 angrenzt. Es ist einerseits an einer horizontalen Drehachse 58 abgestützt und zum anderen über ein Lauflager 61 (Lauftisch). Ein Ritzel 60 am Lauftisch wird von einem Elektromotor 62 angetrieben. Es wirkt mit einer Zahnstange 64 am Lagerbauteil 56 bzw. Lauftisch zusammen. Über die Achse 58 ist das Gefäß 52 kippbar, wie durch den Doppelpfeil 62 angedeutet. Mit Hilfe der Zahnstange 64 kann das Gefäß 52 horizontal verfahren werden, hier senkrecht zur Zeichenebene. Diese Ausgestaltung kommt dann zum Tragen, wenn mehr als ein Gefäß 52 vorgesehen ist und ein anderes Gefäß statt des gezeigten, das daneben angeordnet ist, in die gezeigte Position gebracht wird, d.h. unterhalb des Abgabeendes 50 der Leitung 46 bzw. der Förderschnecke 16.

Der Boden des Gefäßes 52 weist eine Ablauföffnung auf, an die eine Ablaufleitung 66 angeschlossen ist. In dieser ist ein steuerbares Ventil 68 angeordnet. Von der Ablaufleitung 66 abzweigend ist eine Saugleitung 70 vorgesehen, in der ein steuerbares Ventil 72 angeordnet ist.

Im Gefäß 52 befindet sich ein Rotor 72, der über eine horizontale Welle von einem Elektromotor 74 an der Außenseite des Gefäßes 52 antreibbar ist. Am Boden des Gefäßes 52 ist eine Heizvorrichtung 75, beispielsweise eine elektrische Heizvorrichtung, angeordnet. Dem Gefäß 52 ist außerdem ein Füllstandssensor 76 zugeordnet.

Das Gefäß 52 wird an der Oberseite von einem Deckel 78 geschlossen, der um eine seitlich versetzte Achse 80 schwenkbar gelagert ist. An der Oberseite des Deckels 78 greift ein über das Gefäß nach außen kragender Arm 82 an mit einem verstellbaren Gegengewicht 84. Arm 82 mit Gegengewicht 84 halten den Deckel 78 in der in der Figur gezeigten geschlossenen Position, in der der Deckel 78 gegen einen in der Figur nicht dargestellten Anschlag am oberen rechten Rand des Gefäßes 52 anschlägt. Bei einem gewissen Gewicht auf dem Deckel 78 schwenkt dieser in das Gefäß 52 hinein. Die Verschwenkung nach unten wird durch einen Ansatz 86 am Deckel, der dann mit der Wandung zusammenwirkt, begrenzt. Der Deckel 78 ist ferner mit einem erhabenen Rand 88 versehen, der das Ansammeln von Flüssigkeit in einer gewissen Menge ermöglicht, bevor der Deckel 78 in das Gefäß hineinverschwenkt.

Alternativ kann der Schwenkdeckel 78 mit seinem Drehpunkt 80 auch in einem separaten Rahmen liegen, der paßgenau auf dem Anmischgefäß 52 sitzt und zur manuellen Reinigung und Wartung leicht abnehmbar ist. Sinnvollerweise soll sich der Hebel 82 auf einem bestimmten Radius zum Drehpunkt 80 in einer Vertiefung des Rahmens bewegen, so daß der Hebel nicht über den Rand des Rahmens hinausreicht. Damit ist die Voraussetzung geschaffen für eine Abdeckung (Fliegenschutz) unter der sich die Gefäße 52 seitlich bewegen können.

Oberhalb der gemeinsamen Leitung 46 ist ein Vorratsgefäß 90 für Reinigungsmittel angeordnet, das mit einer Leitung 92 verbunden ist, in der ein steuerbares Ventil 94 sitzt. Das Abgabeende 96 der Leitung 92 ist annähernd in gleicher Höhe wie das Abgabeende 50 der Leitung 46. In einer weiteren sinnvollen Ausführung wird das Ventil 94 durch eine steuerbare Pumpe ersetzt. Diese Anordnung hat den Vorteil, daß der Behälter 90 auch unterhalb des Gefäßes 52 angeordnet werden kann.

In einem schräg nach oben weisenden Ansatz 95 des Gehäuses 10 ist eine zentrale Steuereinheit 97 angeordnet, die auch einen Prozeßrechner enthält. Nach außen weisende Bedienungstasten und Anzeigen (nicht gezeigt) der Steuereinheit 97 sind durch einen klappbaren Schutzdeckel 98 gegen Staub und Regen geschützt.

Es sei noch erwähnt, daß das Gehäuse 10 von unten durch einen Boden 100 abgeschlossen ist, durch den lediglich die Leitungen 36 und 38 hindurchgeführt sind.

Im Warmwasserbereiter 30 ist ein Temperaturfühler 102 angeordnet. In einer Vertiefung 104 der Leitung 46 ist ein weiterer Temperaturfühler 106 angeordnet. Nicht dargestellt ist ein Umgebungstemperaturfühler, welcher insbesondere für die Einleitung von Frostsicherungsmaßnahmen sinnwoll ist. Die steuerbaren Teile und Aggregate, die in der Figur gezeigt sind, sind sämtlich an die zentrale Steuereinheit 97 angeschlossen. An die zentrale Steuereinheit ist auch ein Aufrufbereich (nicht gezeigt) angeschlossen, in dem ein Kalb identifiziert wird. Die Identifikation erfolgt in bekannter Weise durch das Anbringen eines sogenannten Responders am Tier, beispielweise am Hals oder am Ohr, in dem die spezifischen Daten gespeichert sind. Sie werden auf die Steuereinheit 97 übertragen, die ermittelt, ob das in dem Aufrufbereich erscheinende Tier ein Tränkeanrecht hat und welche Flüssigfuttermischung mit welcher Temperatur bereitgestellt werden muß. Die Erstellung der Mischung erfolgt im Mischgefäß 52 und wird anschließend vom Kalb über einen Nuckel im Aufrufbereich über die Saugleitung 70 entnommen. Nachstehend wird der Betrieb der gezeigten Vorrichtung näher erläutert.

Es wird angenommen, daß für ein im Aufrufbereich erscheinendes Tier eine Mischung aus Vollmilch und Milchpulver und Wasser hergestellt werden muß. Über den Füllstandssensor 76 wird festgestellt, ob das Mischgefäß 52 leer ist und damit bereit zur Herstellung einer Mischung. Falls nicht, wird das Ventil 68 geöffnet, damit das Gefäß 52 geleert wird. Anschließend wird ggf. die Pumpe 32 in Betrieb gesetzt, die eine vorgegebene Portion z.B.Vollmilch aus einem Vorratsbehälter über die Leitungen 36 und 46 in das Gefäß 52 fördert. Eine kleine Menge gelangt auch in die Vertiefung 104, so daß die aktuelle Temperatur der Vollmilch in der Steuereinheit 97 gespeichert werden kann. In dem Programm der Steuereinheit 97 ist vorgegeben, welche Temperatur die Flüssigfuttermischung für das im Aufrufbereich erschienene Kalb haben soll. Mit dieser Solltemperatur und der vorher ermittelten Milchtemperatur und der Menge Vollmilch im Gefäß 52 ermittelt der Prozeßrechner nunmehr, welche Temperatur die Menge Wasser haben soll, die mit dem Trockenfutter in das Gefäß 52 gegeben wird, um die Futtermischung auf die gewünschte Temperatur zu bringen. Die erforderliche Menge an Milchpulver wird mit Hilfe der Dosierschnecke 16 abgegeben, indem der Motor 18 über eine vorgegebene Zeit angetrieben wird. Das über die Leitung 46 eingegebene Wasser setzt sich zusammen aus einem Anteil Warmwasser aus dem Warmwasserbereiter 30 und Kaltwasser über die Leitung 42. Der Rechner errechnet die jeweiligen Anteile von Warm- und Kaltwasser für eine vorgegebene Gesamtwassermenge, die für die erforderliche Wassertemperatur nötig sind. Entsprechend werden die Ventile 47 und 48 eine vorgegebene Zeit geöffnet. Damit jedoch der Prozeßrechner in der Steuereinheit 97 diese Mengen ermitteln kann, müssen die Temperaturen des Warmwassers und Kaltwassers bekannt sein. Im Warmwasserbereiter 30 wird die Temperatur durch den Sensor 102 gemessen. Die Temperatur des Kaltwassers kann auf irgendeine Art und Weise festgestellt werden. Dies kann auch dadurch geschehen, daß vor dem beschriebenen Vorgang durch kurzzeitiges Öffnen des Ventils 48 eine kleine Menge Kaltwasser vorab fließt, so daß mit Hilfe des Sensors 106 die Kaltwassertemperatur bestimmt werden kann.

Die beschriebene Zumessung von Kalt- und Warmwasser ist nur dann genau, wenn sie unabhängig vom Druck ist. Daher ist das Ventil 44 ein sogenanntes Druckminderventil, das den Arbeitsdruck hinter dem Ventil 44 auf einem vorgegebenen Wert hält, beispielsweise 0,5 bar.

Während der Zugabe des Wassers über die Leitung 46 erfolgt auch das Eindosieren des Milchpulvers, welche Medien beide in Richtung des Deckels 78 strömen, so daß dieser sich absenkt. Die gleichzeitige Zuführung von Wasser und Pulver führt bereits zu einer Durchmischung der Komponenten beim Befüllen des Gefäßes 52.

Während der Befüllung des Mischgefäßes 52 wird der Motor 74 angetrieben, wodurch der Mischrotor 72 den Inhalt des Gefäßes 52 durcheinanderwirbelt. Diese intensive Durchmischung wird dadurch möglich, daß der gegen Verschmutzung von außen (Fliegen) installierte Deckel 78 ein Herausspritzen von Flüssigfutter verhindert. Alternativ kann der Mischrotor 72 auch von einer vertikalen Antriebswelle angetrieben sein, wobei der Motor dann unterhalb des Gefäßes 52 angeordnet ist. Der Motor 74 kann im übrigen in der Drehrichtung umgekehrt werden. Abhängig von der Drehrichtung erfolgt eine stärkere und weniger starke Verwirbelung des Inhalts im Gefäß 52.

Noch während des Mischens kann das Ventil 72 geöffnet werden, so daß das Jungtier über den Saugnuckel und die Leitung 70 Flüssigfutter absaugen kann. Wird das Kalb zum Beispiel von einem anderen Kalb ohne Anrecht aus dem Abrufbereich herausgedrängt, ergeben sich andere Eingabedaten in der Steuereinheit 97, so daß diese das Ventil 72 schließt. Die im Mischgefäß 52 eingebaute Heizung 75 verhindert eine Abkühlung des flüssigen Futters während einer längeren Tränkepause.

Der Ablauf der Herstellung von Flüssigfutter vereinfacht sich, wenn es z.B. keine Vollmilch enthalten sein soll. Im übrigen ist der Ablauf wie beschrieben. Erhält ein Tier auf der anderen Seite ausschließlich Vollmilch, ist eine Regelung der Temperatur für die Vollmilch allein nicht möglich, was in der warmen Jahreszeit auch nicht erforderlich ist. Es ist auch möglich, eine maximale Menge an Vollmilch zu verfüttern, auch wenn eine vorgegebene Tränketemperatur, zum Beispiel 38°, eingehalten werden muß. Zu diesem Zweck wird die Temperatur im Wasseraufbereiter 30 von der Steuereinheit 97 auf einen hohen Wert hochgefahren, zum Beispiel 80°C. Durch Abgabe von nur wenig Heißwasser und Milchpulver zur Vollmilch werden im Mischgefäß die richtige Temperatur und die richtigen Inhaltsstoffe des flüssigen Fertigfutters eingestellt.

Sind zwei oder mehr Mischgefäße der in der Figur gezeigten Art nebeneinander angeordnet, so kann jeweils eines der Gefäßes mit Hilfe des Verstellmotors 62 unterhalb der Abgabeöffnung 50 bzw. der Abgabeöffnung 54 gebracht werden. Nachdem beispielsweise für ein Jungtier in einer ersten Gruppe Flüssigfutter hergestellt wurde, schiebt der Motor 62 über die Zahnstange 64 das Bauteil 56, auf dem das Gefäß 52 und auch die anderen Gefäße angeordnet sind horizontal in die nächste Position. Das Bauteil 56 kann zu diesem Zweck kugelgelagert sein. Während das Kalb aus der ersten Gruppe die hergestellte Futtermischung aufnehmen kann, wird für ein Kalb in einer zweiten Gruppe im nächsten Mischgefäß eine andere Mischung hergestellt. Diese kann zum Beispiel einen höheren Vollmilchanteil enthalten. Sobald die Tränke für das zweite Tier fertiggestellt ist, kann das Kalb aus der zweiten Gruppe ebenfalls trinken. Bei einem aus einer dritten Gruppe zu versorgenden Tier kann dann das Bauteil 56 in der beschriebenen Weise ein weiteres Mischgefäß in die Zuteilposition fahren. Bei der zuletzt beschriebenen Ausführungsform kann auch ein am Gehäuse 10 angebrachter Deckel vorgesehen werden, der in den Positionen "Vermischen" und "Reinigen" die Mischgefäße abdichtet (Fliegenschutz), wie er bereits beschrieben wurde.

Kommt es beim Einsatz von mehreren Mischgefäßen kurzzeitig zu einem Engpaß, so kann die Steuereinheit so programmiert sein, daß für ein Kalb in der Gruppe mit jüngsten Tieren vorrangig Futter hergestellt wird. Ältere Kälber sind eher bereit, einige Sekunden zu warten.

Bei der zuletzt beschriebenen Ausführungsform kann jedes Mischgefäß mit einem Mischrotor versehen werden. Alternativ können die Mischrotoren für alle Gefäße von einer gemeinsamen Welle angetrieben werden.

Mit der gezeigten Vorrichtung kann auch eine vollautomatische Reinigung erfolgen. Wie schon erwähnt, können durch Betätigung des Ventils 68 im Mischgefäß 52 vorhandene Restmengen entfernt werden. Vorher können Milchreste mit Kaltwasser durch Betätigung des Ventils 48 abgespült werden, damit sie ebenfalls über die Leitung 66 abfließen. Nach Entfernen der Milchreste wird durch Betätigung des Ventils 94 Reinigungsmittel aus dem Vorratsgefäß 90 in das Mischgefäß 52 geleitet. Gleichzeitig läuft in dieser Reinigungsstufe durch Betätigung der Ventile 47 und 48 warmes Wasser mit einer bestimmten Temperatur in das Mischgefäß 52. Durch Antrieb des Mischrotors 72 wird die Reinigungslösung eine vorgegebene Zeit verwirbelt. Durch Drehrichtungsumkehr des Motors 74 läuft der Rotor 72 ggf. in der entgegengesetzten Drehrichtung, in der er für eine besonders intensive Verwirbelung sorgt. Am Ende der vorgegebenen Reinigungszeit wird das Spülwasser durch Öffnen des Ventils 68 abgelassen. In einer zweiten Reinigungsstufe kann der Vorgang durch Zugabe von Kaltwasser allein durch Öffnen des Ventils 48 wiederholt werden, um Reste des Spülmittels aus dem Mischgefäß 52 zu entfernen.

Wegen der hohen Durchflußgeschwindigkeit in der Saugleitung 70 kann diese nur wenig verschmutzen. Um auch die Leitung 70 zu reinigen, kann am Ende eines jeden Kalbbesuches, durch die Prozeßsteuerung gesteuert, über die Leitung 46 eine geringe Menge Warmwasser in das Mischgefäß 52 gegeben werden. Das Warmwasser spült nicht nur das Mischgefäß 52, sondern auch die Leitung 70, weil es vom Kalb durch die Leitung angesogen wird. Da das Warmwasser auf den Schutzdeckel 78 gegeben wird, läuft es an den Innenwandflächen des Mischgefäßes 52 entlang, so daß Milchreste gezielt von der Wandfläche heruntergespült werden und dem Kalb nährwertmäßig noch zur Verfügung gestellt wird.

Die beschriebene Reinigung kann in gleicher Weise erfolgen, wenn mehrere Mischgefäße in der oben beschriebenen Weise eingesetzt werden. Das automatische Reinigen erfolgt sinnvollerweise in den ruhigen Nachtstunden, wenn keine Kälberbesuche erfolgen.

Die beschriebene Vorrichtung ist so gesteuert, daß die letzte für ein Kalb bei einem Besuch angemischte Portion vom Kalb entweder ganz ausgetrunken oder durch Öffnen des Ventils 68 entfernt wird, so daß auch bei längeren Wartezeiten bei Minustemperaturen kein Einfrieren erfolgt. Bei niedrigen Temperaturen ist es jedoch erforderlich, diesen beim Anmischen Rechnung zu tragen. Der Sensor 106 oder ein Umgebungstemperaturmesser mißt bei längeren Standzeiten die Umgebungstemperatur. Die Steuereinheit 97 kann hierauf reagieren. Bei niedriger Umgebungstemperatur und längerer Standzeit wird die Tränketemperatur bei der ersten Mischung automatisch erhöht, beispielsweise von 38°C auf 43°C. Die Differenz von 5° dient der Erwärmung der Saugleitung 70. Die nachfolgende Mischung hat dann wieder die für das entsprechende Kalb vorgewählte Temperatur. Wird auf eine Heizvorrichtung 75 verzichtet, kann das Mischgefäß regelmäßig mit einer definierten Menge Heißwasser durch Betätigung des Ventils 47 versorgt werden, wenn über längere Zeit Kälberbesuche nicht erfolgen. Das heiße Wasser kann in dem Mischgefäß mehrere Minuten verbleiben und anschließend über das Ventil 68 abgelassen werden, wenn die nächste Mischung für ein Kalb hergestellt wird. Auch in dieser Weise kann niedrigen Temperaturen Rechnung getragen werden.

Es versteht sich, daß statt einer Zulaufleitung 36 für z.B. Vollmilch auch mehrere vorgesehen werden können, in denen jeweils eine Dosierpumpe installiert ist. Es ist auch denkbar, mehrere Zulaufleitungen für flüssiges Zusatzfutter vorzusehen, die jeweils ein steuerbares Ventil enthalten, wobei dann die Dosierung über eine einzige Pumpe erfolgt. Es ist ferner denkbar, einen Medikamentendosierer am Gehäuse 10 anzubringen, der pulverförmiges Zusatzfutter in das Mischgefäß 52 fördert.

Häufig sind in den Abrufbereichen Wiegemöglichkeiten vorhanden. Die Gewichtsdaten können dann ebenfalls auf den Prozeßrechner in der Steuereinheit 97 übertragen werden, so daß die Bereitung der Mischungen und Mengen des Flüssigfutters auch vom Gewicht der Tiere abhängig gemacht werden kann. Im Abrufbereich kann auch eine Temperaturmeßvorrichtung vorgesehen werden, welche die Körpertemperatur der Tiere mißt. Auch diese kann auf den Prozeßrechner in der Steuereinheit 96 übertragen werden zwecks Kontrolle der Tiergesundheit.

Der Prozeßrechner in der Steuereinheit 97 kann schließlich dazu verwendet werden, eine Kraftfutterstation, die separat zur Tränkevorrichtung vorgesehen ist, zu steuern, um den Tieren individuell abgestimmte Festfuttermengen zuzuteilen, welche auch den Entwicklungsstand des Kalbes berücksichtigen.

## Patentansprüche

1. Vorrichtung zum automatischen Füttern von Kälbern, bei der ein Vorratsgefäß (14) für Trockenfutter, z. B. Milchpulver, ein mit einer Saugleitung (70) verbundenes Mischgefäß (52), eine Dosiervorrichtung (16) zum dosierten Transport von Trockenfutter aus dem Vorratsgefäß (14) in das Mischgefäß (52) und einem Warmwasserbereiter (30), der über eine ein Ventil enthaltende Leitung (40) mit dem Mischgefäß (52) verbunden ist sowie eine ein Ventil (58) aufweisende Kaltwasserzufuhr (42) zum Mischgefäß (52) und eine einen Rechner (97) enthaltende Prozeßsteuerung eine Einheit (10) bilden, wobei die Temperatur im Mischbehälter (52) mit Hilfe eines Sensors auf einen vorgegebenen Wert gebracht wird, **dadurch gekennzeichnet, daß** dem Warmwasserbereiter (30) ein erster Temperaturfühler (102) und der Kaltwasserzufuhr (42) ein zweiter Temperaturfühler für das Kaltwasser bzw. ein Zusatzfutter zugeordnet sind und der von den individuellen Daten der Kälber gespeiste Prozeßrechner (97) aus der vorgegebenen Temperatur für das abzugebende Flüssigfutter, der in das Mischgefäß (52) einzuführenden Flüssigkeitsmenge, der Temperatur von Warm- und Kaltwasser sowie ggf. der Temperatur und der Menge von im Mischgefäß (52) vorhandenem Flüssigfutter die Anteile von Kalt- und Warmwasser errechnet und die Ventile (47, 48) in den Leitungen (40, 42) für Warm- und Kaltwasser entsprechend steuert.

2. Vorrichtung nach Anspruch 1, **dadurch gekennzeichnet, daß** dem Mischgefäß (52) eine einzige Zuleitung (46) zugeordnet ist, in die die Kalt- und Warmwasserzufuhr münden, ggf. auch die Zuleitung (36) für Fertigflüssigfutter, und das Abgabeende der Zuleitung (46) oberhalb des Mischgefäßes (52) liegt.

3. Vorrichtung nach Anspruch 2, **dadurch gekennzeichnet, daß** das Mischgefäß von einem Deckel (78) nach oben abgeschlossen ist, der so schwenkbar gelagert ist, **daß** er beim Auftreffen von Futter bzw. Flüssigkeit von oben in das Mischgefäß (52) hineinschwenkt, der Deckel (76) so geformt ist, **daß** auftreffende Flüssigkeit so verteilt wird, **daß** sie beim Schwenken des Deckels in das Mischgefäß (52) hinein an der Wandung des Mischgefäßes (52) herabläuft und der Deckel so ausgebildet ist, **daß** beim Herstellen einer Mischung im Mischgefäß (52) kein Spritzwasser nach außen entweicht.

4. Vorrichtung nach einem der Ansprüche 1 bis 3, **dadurch gekennzeichnet, daß** am Deckel (78) ein verstellbares Gegengewicht (84) angreift.

5. Vorrichtung nach einem der Ansprüche 1 bis 4, **dadurch gekennzeichnet, daß** der Zuleitung (46) ein Temperaturfühler (106) zugeordnet ist, vorzugsweise in einer Vertiefung (104) der Zuleitung (46) zur Messung der Temperatur des Kaltwassers, indem vor der Zufuhr von Kaltwasser eine Prozeßsteuerung durch kurzfristiges Öffnen des Kaltwasserventils (48) eine geringe Menge Kaltwasser in die Zuleitung (46) gefördert wird und/oder zur Messung der Temperatur des Zusatzfutters dient, welches über die Leitung 36 zugeführt wurde und die Prozeßsteuerung zunächst das Zusatzfutter zuführt und anschließend die Zufuhr der weiteren Mischfutterbestandteile vorsieht.

6. Vorrichtung nach einem der Ansprüche 1 bis 5, **dadurch gekennzeichnet, daß** in der Leitung (38) zur Kaltwasserzufuhr und dem Warmwasserbereiter (30) ein Druckregelventil (44) angeordnet ist.

7. Vorrichtung nach einem der Ansprüche 1 bis 6, **dadurch gekennzeichnet, daß** das Mischgefäß (52) ein von einem Ventil (68) steuerbaren Ablauf (66) aufweist und die Prozeßsteuerung das Ablaufventil (68) öffnet, wenn nach dem Anmischen einer Futtermischung eine vorgegebene Zeit vergangen ist.

8. Vorrichtung nach einem der Ansprüche 1 bis 7, **dadurch gekennzeichnet, daß** im Mischgefäß (72) eine Heizvorrichtung (75) vorgesehen ist.

9. Vorrichtung nach einem der Ansprüche 1 bis 8, **dadurch gekennzeichnet, daß** eine eine Zuteilvorrichtung (94) aufweisende Zuleitung (92) in das Mischgefäß (52) für Reinigungsmittel vorgesehen ist.

10. Vorrichtung nach einem der Ansprüche 1 bis 9, **dadurch gekennzeichnet, daß** zwei oder mehr Mischgefäße nebeneinander angeordnet sind und mittels einer Verstellvorrichtung (62, 60, 64) zur Zuleitung (46) ausrichtbar sind und die Mischgefäße auf einem horizontal verstellbar gelagerten Bauteil (56) oder dergleichen angeordnet sind.

11. Vorrichtung nach einem der Ansprüche 1 bis 10, **dadurch gekennzeichnet, daß** die Prozeßsteuerung nach Abgabe des Flüssigfutters in das Mischgefäß eine geringe Menge Warmwasser in das Mischgefäß (52) steuert.

12. Vorrichtung nach einem der Ansprüche 9 bis 11, **dadurch gekennzeichnet, daß** für die Reinigung des Mischgefäßes (52) die Prozeßsteuerung zunächst Reinigungsmittel und Warmwasser mit einer vorgewählten Temperatur unabhängig von der Temperatur des Flüssigfutters in das Mischgefäß (52) einträgt, der Mischrotor (72) über den Motor (74) angetrieben wird und anschließend nach der Entleerung des Mischgefäßes (52) Kaltwasser in das Mischgefäß (52) eingetragen wird.

13. Vorrichtung nach einem der Ansprüche 1 bis 12, **dadurch gekennzeichnet, daß** bei niedriger Umgebungstemperatur die Prozeßsteuerung die Temperatur im Mischgefäß (52) bei Erstellung der ersten Mischung höher vorwählt als für das Futter vorgesehen.

## Claims

1. A device for the automated feeding of calves in which a reservoir container (14) for dry feed, e.g., powdered milk, a mixer vessel (52) connected to a suction line (70), a dosing device (16) for dosed transfer of dry feed from the reservoir container (14) to the mixer vessel (52), a water heater (30) connected to the mixer vessel (52) via a tube (40) equipped with a valve, and a cold water supply (42) equipped with a valve (48) and leading to the mixer vessel (52), as well as a process controller containing a control computer (97) form one unit (10), the temperature in the mixer vessel (52) being brought to a pre-defined value using a sensor, where a first temperature sensor (102) is located in the water heater (30) and a second temperature sensor for the cold water or for a feed additive, in the cold water supply line (42) and where the process controller (97) provided with the individual data transmitted to it about the calves calculates from the pre-defined temperature of the liquid feed to supply, the quantity of liquid to introduce into the mixer vessel (52), the temperature of hot and cold water, and the temperature and the quantity of liquid feed present, if applicable, in the mixer vessel the parts of hot and cold water and controls the valves (47, 48) in the tubes (40, 42) for hot and cold water accordingly.

2. A device as claimed in Claim 1 where the mixer vessel (52) is configured with a single supply line (46), into which flow the cold and the hot water supply, and also, if applicable, the supply line (36) for a ready-to-use liquid feed, and the outlet orifice of the supply line (46) is located above the mixer vessel (52).

3. A device as claimed in Claim 2 where the mixer vessel is closed at the top by a lid (78) that is mounted for swivelling such that is swivels down into the mixer vessel (52) when hit from above by feed or liquid, the lid (78) has such a form that liquid that has hit it spreads in such a manner that it flows, when the lid swivels down into the mixer vessel (52), into it and down the inner surfaces of the mixer vessel (52), and the lid is constructed such that when a ration is prepared in the mixer vessel (52) no splashes leave it.

4. A device as claimed in any of Claims 1 through 3, where the lid (78) is balanced by an adjustable counterweight (84).

5. A device as claimed in any of Claims 1 through 4, where the supply line (46) is configured with a temperature sensor (106), preferably located in a depression (104) of the supply line (46), for recording the cold water temperature by a process control conveying, before cold water is supplied, a small quantity of cold water through the supply line (46) after opening the cold water valve (48) and/or serving the purpose of recording the temperature of a feed additive that has been supplied through the tube (36), and the process control conveys first this feed additive and subsequently provides for supplying the further mixed feed components.

6. A device as claimed in any of Claims 1 through 5, where in the tube (38) connecting the cold water supply and the water heater (30) a pressure regulator valve (44) is located.

7. A device as claimed in any of Claims 1 through 6, where the mixer vessel (52) is equipped with a drain (66) controlled by a valve (68) and the process controller opens the drain valve (68) when a pre-defined period of time has elapsed after the mixing of a feed ration.

8. A device as claimed in any of Claims 1 through 7, where a heating device (75) is provided in the mixer vessel (52).

9. A device as claimed in any of Claims 1 through 8, where a supply line (92) to the mixer vessel (52) for cleaning products equipped with a rationing device (94) is provided.

10. A device as claimed in any of Claims 1 through 9, where two or more mixer vessels are located next to each other and can be adjusted with respect to the supply line (46) using a positioning device (62, 60, 64) and the mixer vessels are located on a horizontally mounted component (56) or similar.

11. A device as claimed in any of Claims 1 through 10, where the process controller directs a small quantity of hot water into the mixer vessel (52) after having entered the liquid feed into the mixer vessel.

12. A device as claimed in any of Claims 9 through 11, where cleaning the mixer vessel (52) proceeds by the process controller entering at first cleaning product and hot water into the mixer vessel (52) at a pre-set temperature independent from the temperature of the liquid feed, the mixing impeller (72) being driven by a motor (74) and subsequently, after the mixer vessel (52) has been drained, cold water being entered into the mixer vessel (52).

13. A device as claimed in any of Claims 1 through 12, where at low ambient temperature the process controller sets the temperature in the mixer vessel (52) higher, when preparing the first ration, than was pre-defined for the feed.

## Revendications

1. Dispositif pour l'alimentation automatique des veaux avec un réservoir (14) d'aliment sec, par exemple de la poudre de lait, un bol mixeur (52) relié à une ligne de succion (70), un dispositif doseur (16) pour amener l'aliment sec depuis le réservoir (14) au bol mixeur (52), un réchauffeur d'eau (30) relié au bol mixeur (52) par une ligne (40) pourvue d'une vanne, et une ligne d'alimentation en eau froide (42) pourvue d'une vanne (48) et reliée au bol mixeur (52), ainsi qu'un contrôleur du programme qui comporte un ordinateur de commande (97), qui, tous, forment un ensemble (10) où la température dans le bol mixeur (52) est portée à une valeur prédéfinie à l'aide d'un capteur, **caractérisé en ce qu'**un premier capteur de température (102) est situé dans le réchauffeur d'eau (30) et un deuxième capteur de température pour l'eau froide ou un aliment additif, dans la ligne d'alimentation en eau froide (42) et que le contrôleur de programme (97), auquel sont transmises les données pertinentes sur les veaux, calcule, à partir de la température prédéfinie pour l'aliment liquide à distribuer, de la quantité de liquide à introduire dans le bol mixeur (52), de la température de l'eau chaude et de l'eau froide, et de la température et de la quantité d'aliment liquide présent éventuellement dans le bol mixeur, les parts d'eau chaude et d'eau froide et commande en conséquence les vannes (47, 48) situées dans les lignes (40, 42) destinées à l'eau chaude et à l'eau froide.

2. Dispositif selon la Revendication 1 **caractérisé en ce que** une seule ligne d'arrivée (46) est reliée au bol mixeur (52) sur laquelle débouchent l'alimentation en eau chaude et en eau froide ainsi que, éventuellement, l'alimentation (36) en aliment liquide prêt à l'emploi, et que l'orifice de sortie de la ligne d'arrivée (46) est situé au-dessus du bol mixeur (52).

3. Dispositif selon la Revendication 1 **caractérisé en ce que**, en haut, le bol mixeur est fermé par un couvercle (78) monté pivotant afin de lui permettre de s'abaisser dans le bol mixeur (52) quand du liquide ou de l'aliment se déverse sur lui d'en haut, que le couvercle (78) a une forme telle que du liquide se déversant sur lui d'en haut se répand de manière à couler, quand le couvercle s'abaisse en pivotant dans le bol mixeur (52), le long des parois intérieures du bol mixeur (52), et que le couvercle est réalisé de telle manière que lors de la préparation d'une ration dans le bol mixeur (52), des éclaboussures n'en sortent pas.

4. Dispositif selon l'une quelconque des Revendications 1 à 3 **caractérisé en ce que** le couvercle (78) est équilibré par un contrepoids réglable (84).

5. Dispositif selon l'une quelconque des Revendications 1 à 4 **caractérisé en ce que** la ligne d'arrivée (46) est pourvue d'un capteur de température (106), situé de préférence dans une dépression (104) de la ligne d'arrivée (46), destiné à relever la température de l'eau froide, et ceci sous forme d'un contrôleur du programme laissant passer, avant de fournir de l'eau froide, une petite quantité d'eau froide par la ligne d'arrivée (46) en commandant pendant une courte durée la vanne d'eau froide (48) et/ou servant à relever la température d'un aliment additif arrivant par la ligne (36) prévue à cet effet, et que le contrôleur du programme ajoute d'abord ledit aliment additif et ensuite prévoit les autres composantes de l'aliment mixte.

6. Dispositif selon l'une quelconque des Revendications 1 à 5 **caractérisé en ce que** la ligne (38) qui relie l'alimentation en eau froide et le réchauffeur d'eau (30) et pourvue d'une vanne régulatrice de la pression (44).

7. Dispositif selon l'une quelconque des Revendications 1 à 6 **caractérisé en ce que** le bol mixeur (52) est pourvu d'une ligne de vidange (66) munie d'une vanne de contrôle (68) et que le contrôleur du programme commande ladite vanne de vidange (68) au bout d'un certain temps prédéfini après que la préparation d'une ration d'aliment est terminée.

8. Dispositif selon l'une quelconque des Revendications 1 à 7 **caractérisé en ce qu'**un dispositif de chauffe (75) est prévu dans le bol mixeur (52).

9. Dispositif selon l'une quelconque des Revendications 1 à 8 **caractérisé en ce qu'**une ligne d'arrivée (92) munie d'un dispositif de rationnement (94) est prévue pour amener du produit de lavage au bol mixeur (52).

10. Dispositif selon l'une quelconque des Revendications 1 à 9 **caractérisé en ce que** deux bols mixeurs ou plus sont situés les uns à côté des autres et peuvent être ajustés par rapport à la ligne d'arrivée (46) à l'aide d'un dispositif de repositionnement (62, 60, 64) et que les bols mixeurs sont situés sur une composante d'installation montée en vue d'un mouvement horizontal (56), ou similaire.

11. Dispositif selon l'une quelconque des Revendications 1 à 10 **caractérisé en ce que** le contrôleur du programme introduit, après avoir introduit l'aliment liquide dans le bol mixeur, une petite quantité d'eau chaude dans ledit bol mixeur (52).

12. Dispositif selon l'une quelconque des Revendications 9 à 11 **caractérisé en ce que**, pour le lavage du bol mixeur (52), le contrôleur du programme introduit d'abord, dans le bol mixeur (52), du produit de lavage et de l'eau chaude à une température prédéfinie indépendante de la température de l'aliment liquide, que l'hélice mélangeuse (72) est actionnée par un moteur (74), et qu'ensuite, après la vidange du bol mixeur (52), de l'eau froide est introduite dans le bol mixeur (52).

13. Dispositif selon l'une quelconque des Revendications 1 à 12 **caractérisé en ce que**, par conditions de température ambiante basse, le contrôleur du programme augmente au-delà de ce qui a été prédéfini pour l'aliment en question, la température dans le bol mixeur (52) lors de la préparation de la première ration.
